# EUROPEAN PATENT APPLICATION

(11) **EP 4 545 256 A1**
(43) Date of publication of application: **30.04.2025**
(21) Application number: 23849804.2
(22) Date of filing: 29.06.2023
(51) Int. Cl.: B25J 13/08, B25J 19/04

(54) **ROBOT SYSTEM, ROBOT, AND METHOD FOR CONTROLLING ROBOT SYSTEM**

(30) Priority: 02.08.2022 JP 2022123471
(71) Applicant: KAWASAKI JUKOGYO KABUSHIKI KAISHA, Kobe-shi, Hyogo 650-8670 (JP)
(72) Inventor: XU, Tianfen, Chuo-ku, Kobe-shi, Hyogo 650-8670 (JP); YAMASUMI, Satoru, Chuo-ku, Kobe-shi, Hyogo 650-8670 (JP)
(74) Representative: Müller-Boré & Partner Patentanwälte PartG mbB
(86) International application number: PCT/JP2023/024144
(87) International publication number: WO 2024/029245

(57) **Abstract**

A robot system (100) includes a controller (70) configured or programmed to control an imaging area of an imager (40) such that a workpiece (2) to be held next is imaged during operation to rotate a robot arm (21) around a first rotation axis (JT1 axis) to place the workpiece (2) held by a hand (30) at a predetermined placement location (3).

## Description

### Technical Field

The present disclosure relates to a robot system, a robot, and a method for controlling a robot system.

### Background Art

Conventionally, a robot system including a robot arm to which a hand configured to hold a workpiece is attached is known. For example, U.S. Patent No. 10,124,489 discloses a robot system that uses a hand to hold a desired workpiece from a plurality of stacked box-shaped workpieces and move the held workpiece to a predetermined location. Specifically, in U.S. Patent No. 10,124,489, the plurality of stacked box-shaped workpieces are imaged by an imager, and the robot system selects a workpiece to be held by the hand from among the plurality of stacked box-shaped workpieces based on the image captured by the imager. The hand then holds the selected workpiece. The workpiece held by the hand is moved to the predetermined location. In U.S. Patent No. 10,124,489, the imager is fixed at a location spaced apart from a robot arm. In addition, in U.S. Patent No. 10,124,489, the imager may be arranged on the robot arm. Furthermore, imaging of the plurality of stacked box-shaped workpieces by the imager and moving the workpiece with the hand are repeatedly performed.

### Prior Art

### Patent Document

Patent Document 1: U.S. Patent No. 10,124,489

### Summary of the Invention

When the imager is fixed at the location spaced apart from the robot arm, as described in U.S. Patent No. 10,124,489, it is necessary to change the fixed location of the imager such that the imager faces a changed workpiece placement location direction when the arrangement locations of the box-shaped workpieces to be held are changed and the workpieces are positioned outside the field of view of the imager. When the imager is arranged on the robot arm, as described in U.S. Patent No. 10,124,489, the robot arm moves to move the workpiece held by the hand to the predetermined location, and the imager also moves together with the robot arm. At this time, the imager arranged on the robot arm faces a direction different from a direction in which the plurality of stacked box-shaped workpieces are arranged. Therefore, when the plurality of stacked box-shaped workpieces are next imaged by the imager, it is necessary to move the robot arm such that the imager faces the plurality of stacked box-shaped workpieces, and to stop the robot arm once to image the plurality of box-shaped workpieces with the imager. In other words, it is necessary to stop the robot arm to image the workpieces with the imager during a period of time other than a period of time during which the operation to place the workpiece held by the hand at the predetermined location is performed. Therefore, the cycle time for repeated operations to image the workpieces with the imager and move the workpiece with the hand disadvantageously increases.

The present disclosure is intended to solve the above problems. The present disclosure aims to provide a robot system, a robot, and a method for controlling a robot system in which even when a placement location of a workpiece is changed, it is not necessary to change the fixed location of an imager, and the cycle time for repeated operations to image a workpiece with the imager and move the workpiece with a hand can be decreased.

A robot system according to a first aspect of the present disclosure includes a robot main body including a base and a robot arm including a proximal end attached to the base so as to rotate around a first rotation axis, and a distal end to which a hand operable to hold a workpiece is attached, an imager on the robot main body rotatable in accordance with movement of the robot main body, and including an imaging area to be changed separately from a change in the imaging area caused by rotation of the robot arm around the first rotation axis, and a controller. The controller is configured or programmed to control the imaging area of the imager such that the workpiece to be held next is imaged during operation to rotate the robot arm around the first rotation axis to place the workpiece held by the hand at a predetermined placement location. The term "an imager on the robot main body" includes a case in which the imager is directly on the robot main body, and a case in which the imager is on the robot main body via some kind of member.

In the robot system according to the first aspect of the present disclosure, as described above, the imager is on the robot main body, is rotatable in accordance with movement of the robot main body, and includes the imaging area to be changed separately from the change in the imaging area caused by the rotation around the first rotation axis, and the controller is configured or programmed to control the imaging area of the imager such that the workpiece to be held next is imaged during the operation to rotate the robot arm around the first rotation axis to place the workpiece held by the hand at the predetermined placement location. Accordingly, the imager is on the robot main body, and thus even when the placement location of the workpiece is changed, the imager can be moved by moving the robot main body such that the workpiece is positioned within the field of view of the imager. Therefore, even when the placement location of the workpiece is changed, it is not necessary to change the fixed location of the imager. Furthermore, the imaging area of the imager is changed separately from the change in the imaging area caused by the rotation around the first rotation axis, and thus the workpiece to be held next can be imaged during the operation to rotate the robot arm around the first rotation axis to place the workpiece held by the hand at the predetermined placement location. Therefore, the operation to place the workpiece at the predetermined placement location and imaging of the workpiece to be held next can be performed simultaneously. Thus, it is not necessary to stop the robot arm to image the workpiece with the imager during a period of time other than a period of time during which the operation to place the workpiece at the predetermined placement location is performed. Consequently, the cycle time for repeated operations to image the workpiece with the imager and move the workpiece with the hand can be decreased. Thus, even when the placement location of the workpiece is changed, it is not necessary to change the fixed location of the imager, and the cycle time for the repeated operations to image the workpiece with the imager and move the workpiece with the hand can be decreased.

A robot according to a second aspect of the present disclosure includes a robot main body including a base and a robot arm including a proximal end attached to the base so as to rotate around a predetermined rotation axis, and a distal end to which a hand operable to hold a workpiece is attached, an imager on the robot main body rotatable in accordance with movement of the robot main body, and including an imaging area to be changed separately from a change in the imaging area caused by rotation of the robot arm around the predetermined rotation axis, and a controller. The controller is configured or programmed to control the imaging area of the imager such that the workpiece to be held next is imaged during operation to rotate the robot arm around the predetermined rotation axis to place the workpiece held by the hand at a predetermined placement location.

In the robot according to the second aspect of the present disclosure, as described above, the imager is on the robot main body, is rotatable in accordance with movement of the robot main body, and includes the imaging area to be changed separately from the change in the imaging area caused by the rotation around the first rotation axis, and the controller is configured or programmed to control the imaging area of the imager such that the workpiece to be held next is imaged during the operation to rotate the robot arm around the first rotation axis to place the workpiece held by the hand at the predetermined placement location. Accordingly, the imager is on the robot main body, and thus even when the placement location of the workpiece is changed, the imager can be moved by moving the robot main body such that the workpiece is positioned within the field of view of the imager. Therefore, even when the placement location of the workpiece is changed, it is not necessary to change the fixed location of the imager. Furthermore, the imaging area of the imager is changed separately from the change in the imaging area caused by the rotation around the first rotation axis, and thus the workpiece to be held next can be imaged during the operation to rotate the robot arm around the first rotation axis to place the workpiece held by the hand at the predetermined placement location. Therefore, the operation to place the workpiece at the predetermined placement location and imaging of the workpiece to be held next can be performed simultaneously. Thus, it is not necessary to stop the robot arm to image the workpiece with the imager during a period of time other than a period of time during which the operation to place the workpiece at the predetermined placement location is performed. Consequently, the cycle time for repeated operations to image the workpiece with the imager and move the workpiece with the hand can be decreased. Thus, it is possible to provide the robot in which even when the placement location of the workpiece is changed, it is not necessary to change the fixed location of the imager, and the cycle time for the repeated operations to image the workpiece with the imager and move the workpiece with the hand can be decreased.

A method for controlling a robot system according to a third aspect of the present disclosure is a method for controlling a robot system including a robot main body including a base and a robot arm including a proximal end attached to the base so as to rotate around a predetermined rotation axis, and a distal end to which a hand operable to hold a workpiece is attached, and an imager on the robot main body rotatable in accordance with movement of the robot main body and to image the workpiece, and includes causing the hand to hold the workpiece, rotating the robot arm around the predetermined axis while the workpiece is held by the hand to place the workpiece at a predetermined placement location, and controlling an imaging area of the imager separately from a change in the imaging area caused by rotation around the predetermined rotation axis such that the workpiece to be held next is imaged with the imager, during operation to place the workpiece held by the hand at the predetermined placement location.

As described above, the method for controlling the robot system according to the third aspect of the present disclosure includes rotating the robot arm around the predetermined axis while the workpiece is held by the hand to place the workpiece at the predetermined placement location, and controlling the imaging area of the imager separately from the change in the imaging area caused by rotation around the predetermined rotation axis such that the workpiece to be held next is imaged with the imager, during the operation to place the workpiece held by the hand at the predetermined placement location. Accordingly, the imager is on the robot main body, and thus even when the placement location of the workpiece is changed, the imager can be moved by moving the robot main body such that the workpiece is positioned within the field of view of the imager. Therefore, even when the placement location of the workpiece is changed, it is not necessary to change the fixed location of the imager. Furthermore, the imaging area of the imager is changed separately from the change in the imaging area caused by the rotation around the first rotation axis, and thus the workpiece to be held next can be imaged during the operation to rotate the robot arm around the first rotation axis to place the workpiece held by the hand at the predetermined placement location. Therefore, the operation to place the workpiece at the predetermined placement location and imaging of the workpiece to be held next can be performed simultaneously. Thus, it is not necessary to stop the robot arm to image the workpiece with the imager during a period of time other than a period of time during which the operation to place the workpiece at the predetermined placement location is performed. Consequently, the cycle time for repeated operations to image the workpiece with the imager and move the workpiece with the hand can be decreased. Thus, it is possible to provide the method for controlling the robot system in which even when the placement location of the workpiece is changed, it is not necessary to change the fixed location of the imager, and the cycle time for the repeated operations to image the workpiece with the imager and move the workpiece with the hand can be decreased.

According to the present disclosure, even when the placement location of the workpiece is changed, it is not necessary to change the fixed location of the imager, and the cycle time for the repeated operations to image the workpiece with the imager and move the workpiece with the hand can be decreased.

### Brief Description of the Drawings

FIG. 1 is a perspective view showing the configuration of a robot system according to a first embodiment.
FIG. 2 is a block diagram showing the configuration of the robot system according to the first embodiment.
FIG. 3 is a perspective view showing the configuration of a robot according to the first embodiment.
FIG. 4 is a perspective view showing the configuration of a hand according to the first embodiment.
FIG. 5 is a flowchart for illustrating the operation of the robot system according to the first embodiment.
FIG. 6 is a perspective view showing the configuration of a robot system according to a second embodiment.
FIG. 7 is a perspective view showing the configuration of a robot system according to a third embodiment.
FIG. 8 is a perspective view showing the configuration of a robot according to a modified example. Modes for Carrying Out the Invention

An embodiment embodying the present disclosure is hereinafter described on the basis of the drawings.

### First Embodiment

The configuration of a robot system 100 according to a first embodiment is now described. In this specification, an upward-downward direction is defined as a Z direction. A direction perpendicular to the Z direction is defined as an X direction. A direction perpendicular to the Z direction and the X direction is defined as a Y direction.

### Robot System

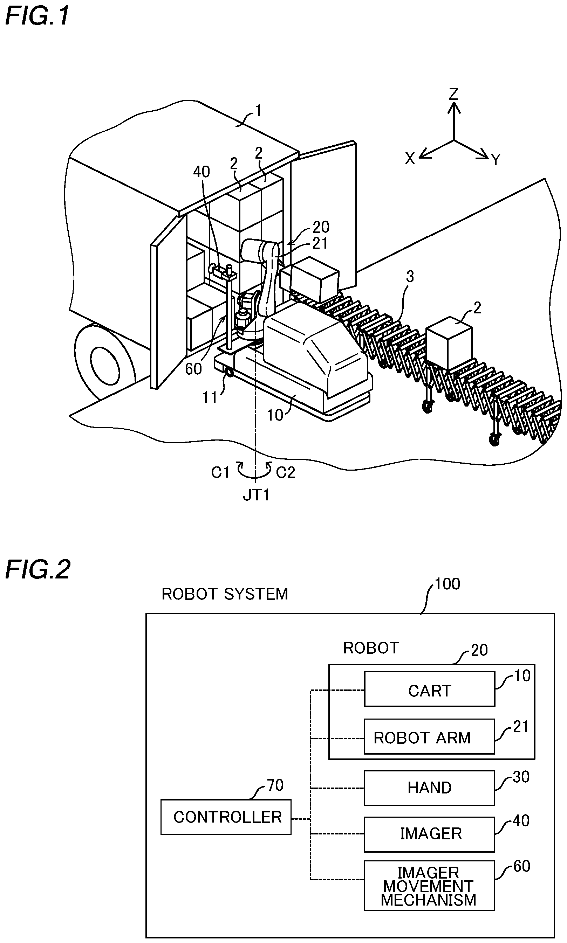

As shown in FIG. 1, the robot system 100 holds a plurality of workpieces 2 placed in a cargo compartment of a truck 1, and places the workpieces 2 on a conveyor 3.

In the first embodiment, the workpieces 2 are box-shaped. The workpieces 2 are cardboard boxes, for example. The workpieces 2 are stacked. The conveyor 3 is an extendable conveyor 3, for example. The conveyor 3 is an example of a predetermined placement location.

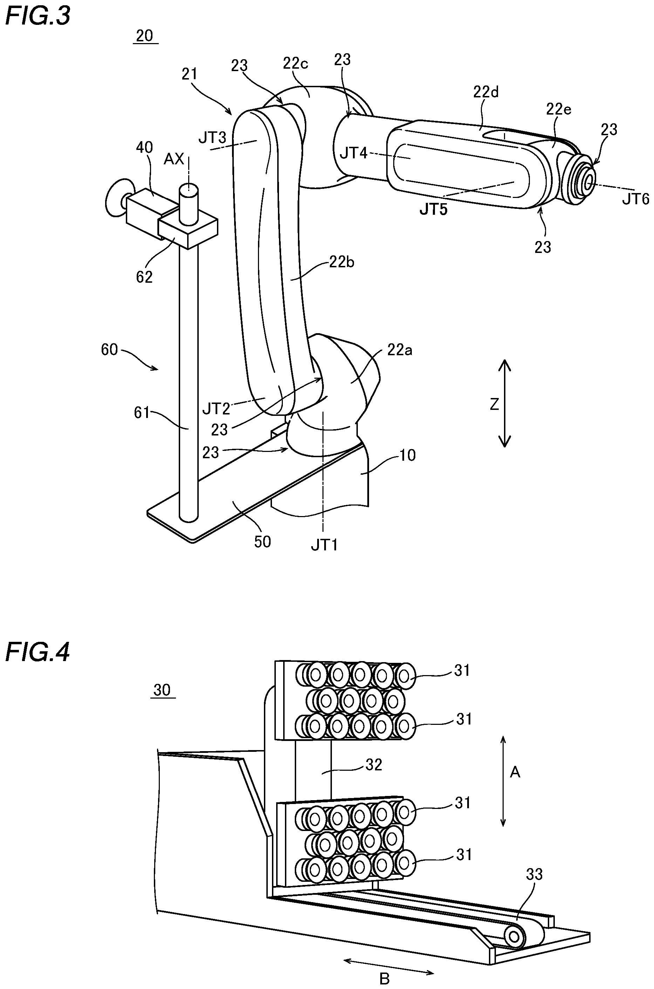

As shown in FIG. 2, the robot system 100 includes a robot 20 including a cart 10 and a robot arm 21, a hand 30, an imager 40, a mounting member 50 shown in FIG. 3, an imager movement mechanism 60, and a controller 70. Alternatively, the conveyor 3 may be included in the robot system 100. The cart 10 is an example of a base. The robot 20 is an example of a robot main body.

### Cart

In this embodiment, as shown in FIG. 1, the robot arm 21 is placed on the cart 10. The cart 10 moves the robot arm 21. The cart 10 is an automated guided vehicle (AGV), for example. The cart 10 includes a drive such as a motor, and wheels 11 that are rotated by the drive. The drive is controlled by the controller 70 to move the cart 10. The cart 10 automatically moves the robot arm 21 to the vicinity of the truck 1.

### Robot Arm

As shown in FIG. 3, a proximal end of the robot arm 21 is attached to the cart 10 so as to rotate around a JT1 axis with respect to the cart 10. The hand 30 shown in FIG. 4 that holds a workpiece 2 is attached to a distal end of the robot arm 21. The JT1 axis is a rotation axis along the Z direction.

In the first embodiment, the robot arm 21 is an articulated robot arm. Specifically, the robot arm 21 is a vertical articulated robot arm. The robot arm 21 includes an arm 22a connected to the cart 10, and arms 22b, 22c, 22d, and 22e arranged between the arm 22a and the hand 30. The arms 22a, 22b, 22c, 22d, and 22e are connected to each other by joints 23. For example, six joints 23 are arranged. That is, the robot arm 21 includes a 6-axis vertical articulated robot. The six joints 23 rotate around the JT1 axis, a JT2 axis, a JT3 axis, a JT4 axis, a JT5 axis, and a JT6 axis, respectively. In addition, a drive such as a motor and a position detector such as an encoder are arranged in each of the plurality of joints 23. The drive is controlled by the controller 70 such that movement of the robot arm 21 is controlled. The arm 22a is an example of a proximal end arm. The arms 22b, 22c, 22d, and 22e are examples of a distal end arm. The JT1 axis is an example of a first rotation axis or a predetermined rotation axis.

### Hand

As shown in FIG. 4, the hand 30 includes suckers 31 that suction the box-shaped workpiece 2. A plurality of suckers 31 are arranged. The hand 30 includes a movement mechanism 32 that moves the suckers 31 linearly along an A direction and a movement mechanism 33 that moves the suckers 31 linearly along a B direction. The movement mechanisms 32 and 33 include drives such as motors. The drives are controlled by the controller 70 such that the suckers 31 are moved by the movement mechanisms 32 and 33. The suckers 31 are suction pads, for example.

### Imager

As shown in FIG. 3, the imager 40 is arranged on the robot 20. In the first embodiment, the imager 40 is arranged on the robot arm 21. The imager 40 rotates in accordance with movement of the robot 20. Specifically, the imager 40 rotates together with rotation of the robot arm 21 around the JT1 axis, and an imaging area is changed separately from a change in the imaging area caused by the rotation around the JT1 axis. The imaging area of the imager 40 is changed by at least one of changing an imaging direction by moving the imager 40 separately from the change in the imaging area caused by the rotation around the JT1 axis and changing the zoom magnification of the imager 40. In the first embodiment, the imaging area of the imager 40 is changed by changing the imaging direction by moving the imager 40 separately from the change in the imaging area caused by the rotation around the JT1 axis. The imaging area of the imager 40 refers to a range imaged by the imager 40. For example, the imaging area is an area including all of the plurality of stacked box-shaped workpieces 2, or an area including only a portion of the plurality of stacked box-shaped workpieces 2. The imager 40 is a three-dimensional camera. Alternatively, the imager 40 may be a two-dimensional camera. The imager 40 does not have a pan function, a tilt function, or a zoom function. The imager 40 rotates together with rotation of the robot arm 21 around the JT1 axis, and thus the amount of rotation of the imager 40 itself for imaging the workpieces 2 can be decreased as compared with a case in which the imager 40 does not rotate together with rotation of the robot arm 21 around the JT1 axis. In addition, the imager 40 rotates together with rotation of the robot arm 21 around the JT1 axis, and thus interference between the imager 40 and the robot arm 21 can be reduced.

In the first embodiment, the imager 40 is attached to the arm 22a. Specifically, the imager 40 is attached to the arm 22a via the mounting member 50.

In the first embodiment, the mounting member 50 rotates together with the arm 22a and is provided to attach the imager 40 to the arm 22a. The mounting member 50 is attached to the arm 22a. The mounting member 50 rotates together with the arm 22a around the JT1 axis. The mounting member 50 has a plate shape that is arranged along an XY plane, which is a horizontal plane.

In the first embodiment, the imager movement mechanism 60 is attached to the mounting member 50. The imager movement mechanism 60 performs at least one of lifting the imager 40 up and down and rotating the imager 40 around an AX axis different from the JT1 axis. The imager 40 is moved by the imager movement mechanism 60 such that the imaging area of the imager 40 is changed. Specifically, the imager movement mechanism 60 includes a pillar 61 and a lifter 62. The pillar 61 is attached to the mounting member 50 along the Z direction. The pillar 61 is attached to the mounting member 50 so as to be horizontally spaced apart from the robot arm 21. The lifter 62 rises and falls along the pillar 61. The imager 40 is attached to the lifter 62. The imager 40 rises and falls together with the lifter 62 rising and falling. The lifter 62 rotates around the AX axis. The imager 40 rotates together with rotation of the lifter 62 around the AX axis. The AX axis is the central axis of the pillar 61. A drive such as a motor is arranged in the lifter 62. The drive is controlled by the controller 70 such that the lifter 62 rises, falls, and rotates. The pillar 61 is attached to the mounting member 50 so as to be horizontally spaced apart from the robot arm 21, and thus the imager 40 is horizontally spaced apart from the robot arm 21. The AX axis is an example of a second rotation axis.

### Operation of Robot System

In the first embodiment, the controller 70 controls the imaging area of the imager 40 such that a workpiece 2 to be held next is imaged during the operation to rotate the robot arm 21 around the JT1 axis to place the workpiece 2 held by the hand 30 on the conveyor 3. The controller 70 is arranged in the cart 10, for example. Alternatively, the controller 70 may be arranged in a location other than the cart 10. The controller 70 controls the operations of the cart 10, the robot arm 21, the hand 30, the imager 40, and the imager movement mechanism 60. One controller 70 may control all of the operations of the robot arm 21, the hand 30, the imager 40, and the imager movement mechanism 60, or the operations of the robot arm 21, the hand 30, the imager 40, and the imager movement mechanism 60 may be controlled by cooperation between a plurality of controllers 70. The expression "during the operation to place the workpiece 2 on the conveyor 3" refers to a period of time from when rotation of the robot arm 21 around the JT1 axis is stopped until when the workpiece 2 held by the hand 30 is placed on the conveyor 3 and then rotation of the robot arm 21 around the JT1 axis is started again. The operation of the robot system 100 is specifically described below. The following operation is controlled by the controller 70.

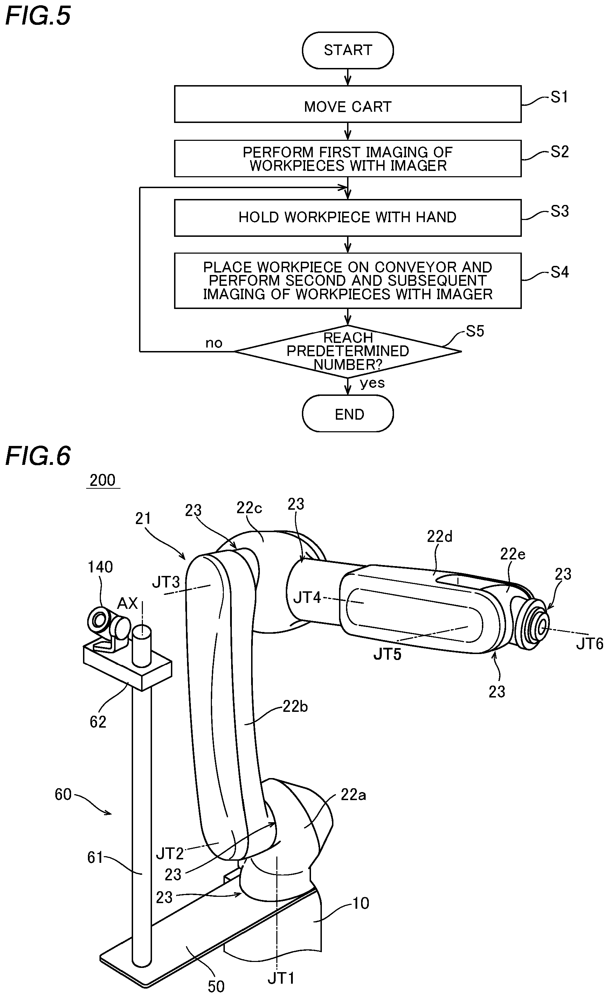

As shown in FIG. 5, in step S1, the cart 10 moves such that the robot arm 21 moves to the vicinity of the truck 1. The conveyor 3 moves to the vicinity of the truck 1 together with the cart 10. For example, the cart 10 and the conveyor 3 are connected to each other, and thus the conveyor 3 moves together with the cart 10. The cart 10 and the conveyor 3 may not be connected to each other. In such a case, the conveyor 3 is placed in the vicinity of the truck 1 in advance.

In step S2, the robot arm 21 is rotated around the JT1 axis such that the imager 40 directly faces the plurality of workpieces 2 stacked on the truck 1. The imager 40 images the plurality of workpieces 2 stacked on the truck 1. The controller 70 controls movement of the cart 10, and lifting, lowering, and rotation of the lifter 62 of the imager movement mechanism 60 such that the imager 40 can image all of the plurality of workpieces 2 stacked on the truck 1.

In the first embodiment, in step S3, the controller 70 causes the hand 30 to hold one of the plurality of workpieces 2. Specifically, based on an image captured by the imager 40, a workpiece 2 to be held first by the hand 30 is selected from among the plurality of workpieces 2 stacked on the truck 1. The selected workpiece 2 is then held by the hand 30. For example, the controller 70 analyzes the image captured by the imager 40 and recognizes the plurality of workpieces **2.** The controller 70 selects, as the workpiece 2 to be held first, a workpiece 2 that is relatively easy to hold by the hand 30 from among the plurality of workpieces **2.** For example, the controller 70 selects, as the workpiece 2 to be held first, the topmost workpiece 2 from among the stacked workpieces 2.

In the first embodiment, in step S4, the controller 70 controls the imager movement mechanism 60 such that the imager 40 directly faces a workpiece 2 to be held next among the plurality of workpieces 2 during the operation to rotate the robot arm 21 around the JT1 axis to place the workpiece 2 held by the hand 30 on the conveyor 3. Specifically, while the selected workpiece 2 is held by the hand 30, the robot arm 21 is rotated in a C1 direction shown in FIG. 1 around the JT1 axis. Then, the hand 30 places the workpiece 2 on the conveyor 3. By rotating the robot arm 21 in the C1 direction around the JT1 axis, the imager 40 faces the workpieces 2 stacked on the truck 1. The controller 70 selects the workpiece 2 to be held next from the image, in which all of the plurality of workpieces 2 appear, captured by the imager 40 in step S2. Then, the controller 70 controls lifting, lowering, and rotation of the lifter 62 of the imager movement mechanism 60 such that the imager 40 directly faces the workpiece 2 to be held next. When the workpiece 2 held by the hand 30 falls, the controller 70 controls lifting, lowering, and rotation of the lifter 62 of the imager movement mechanism 60 to control the imager 40 to image the fallen workpiece 2. The fallen workpiece 2 is then held and placed on the conveyor 3 by the hand 30. The expression "the imager 40 directly faces the workpiece 2" indicates that the workpiece 2 to be held next is present on an extension of the imaging direction of the imager 40.

In the first embodiment, in step S4, during the operation to rotate the robot arm 21 around the JT1 axis to place the workpiece 2 held by the hand 30 on the conveyor 3, the controller 70 controls the imaging area of the imager 40 such that a workpiece 2 to be held next among the remaining workpieces 2 of the plurality of workpieces 2 is imaged without imaging all of the remaining workpieces 2. For example, the workpiece 2 to be held next is a workpiece 2 in the vicinity of the workpiece 2 first held and placed on the conveyor 3 by the hand 30. The imager 40 images the workpiece 2 to be held next and the workpieces 2 arranged around the workpiece 2 to be held next. Then, the robot arm 21 is rotated in a C2 direction around the JT1 axis such that the operation in step S3 is performed.

The operations in step S3 and step S4 are repeated until it is determined in step S5 that the number of workpieces 2 placed on the conveyor 3 reaches a predetermined number. The predetermined number refers to the number of all workpieces 2 placed on the truck 1, for example. Furthermore, a user may remotely check the transport status of the workpieces 2 based on the images captured by the imager 40.

### Advantages of First Embodiment

The imager 40 is on the robot arm 21, is rotatable in accordance with movement of the robot 20, and includes the imaging area to be changed separately from a change in the imaging area caused by the rotation around the JT1 axis, and the controller 70 is configured or programmed to control the imaging area of the imager 40 such that the workpiece 2 to be held next is imaged during the operation to rotate the robot arm 21 around the JT1 axis to place the workpiece 2 held by the hand 30 on the conveyor 3. Accordingly, the imager 40 is on the robot arm 21, and thus even when the placement locations of the workpieces 2 are changed, the imager 40 can be moved by moving the robot arm 21 such that the workpieces 2 are positioned within the field of view of the imager 40. Therefore, even when the placement locations of the workpieces 2 are changed, it is not necessary to change the fixed location of the imager 40. Furthermore, the imaging area of the imager 40 is changed separately from the change in the imaging area caused by the rotation around the JT1 axis, and thus the workpiece 2 to be held next can be imaged during the operation to rotate the robot arm 21 around the JT1 axis to place the workpiece 2 held by the hand 30 on the conveyor 3. Therefore, the operation to place the workpiece 2 on the conveyor 3 and imaging of the workpiece 2 to be held next can be performed simultaneously. Thus, it is not necessary to stop the robot arm 21 to image the workpieces 2 with the imager 40 during a period of time other than a period of time during which the operation to place the workpiece 2 on the conveyor 3 is performed. Consequently, the cycle time for repeated operations to image the workpieces 2 with the imager 40 and move the workpiece 2 with the hand 30 can be decreased. Thus, even when the placement locations of the workpieces 2 are changed, it is not necessary to change the fixed location of the imager 40, and the cycle time for the repeated operations to image the workpieces 2 with the imager 40 and move the workpiece 2 with the hand 30 can be decreased.

The imaging area of the imager 40 is changed by changing the imaging direction by moving the imager 40 separately from the change in the imaging area caused by the rotation around the JT1 axis. Accordingly, the imaging area of the imager 40 can be easily changed. Even when the workpieces 2 are not positioned within the field of view of the imager 40 by only moving the robot arm 21, the workpieces 2 can be positioned within the field of view of the imager 40 by moving the imager 40 separately from the change in the imaging area caused by the rotation around the JT1 axis.

The robot arm 21 includes the articulated robot arm including the arm 22a connected to the base, and the arms 22b, 22c, 22d, and 22e between the arm 22a and the hand 30, and the imager 40 is attached to the arm 22a and is rotatable together with rotation of the robot arm 21 around the JT1 axis. Accordingly, the imager 40 can be easily rotated together with rotation of the robot arm 21 around the JT1 axis.

The robot system 100 further includes the mounting member 50 rotatable together with the arm 22a and to attach the imager 40 to the arm 22a. Accordingly, the imager 40 can be attached to the arm 22a while interference between the imager 40 and the arm 22a is reduced or prevented, unlike a case in which the imager 40 is directly attached to the arm 22a.

The robot system 100 further includes the imager movement mechanism 60 attached to the mounting member 50 to perform at least one of lifting the imager 40 up and down and rotating the imager 40 around the AX axis different from the JT1 axis. Furthermore, the imager 40 is moved by the imager movement mechanism 60 such that the imaging area of the imager 40 is changed. Accordingly, during the operation to rotate the robot arm 21 around the JT1 axis to place the workpiece 2 held by the hand 30 on the conveyor 3, the imager 40 can be easily moved to a location at which the imager 40 can image the workpieces 2 to be imaged by at least one of lifting the imager 40 up and down and rotating the imager 40 around the AX axis. Furthermore, when the workpieces 2 are stacked vertically, it is necessary to provide a plurality of imagers 40 to image the upper workpieces 2 and the lower workpieces 2 among the stacked workpieces 2 when the location of the imager 40 is fixed. On the other hand, by lifting the imager 40 up and down, both the upper workpieces 2 and the lower workpieces 2 among the stacked workpieces 2 can be imaged by a single imager 40, and thus the complexity of the configuration of the robot system 100 can be reduced or prevented. Furthermore, by moving the imager 40 with the imager movement mechanism 60, a single imager 40 can image a wide range.

A plurality of workpieces 2 are arranged, and the controller 70 is configured or programmed to cause the hand 30 to hold one of the plurality of workpieces 2, and control the imager movement mechanism 60 such that the imager 40 directly faces the workpiece 2 to be held next among the plurality of workpieces 2 during the operation to rotate the robot arm 21 around the JT1 axis to place the workpiece 2 held by the hand 30 on the conveyor 3. Accordingly, the imager 40 can easily image the workpiece 2 to be held next at the same time as the workpiece 2 held by the hand 30 is placed on the conveyor 3.

A plurality of workpieces 2 are arranged, and the controller 70 is configured or programmed to cause the hand 30 to hold one of the plurality of workpieces 2, and control the imaging area of the imager 40 such that the workpiece 2 to be held next among the remaining workpieces of the plurality of workpieces is imaged without imaging all of the remaining workpieces 2 during the operation to rotate the robot arm 21 around the JT1 axis to place the workpiece 2 held by the hand 30 on the conveyor 3. Accordingly, it is possible to reduce the processing load of the image captured by the imager 40, unlike a case in which all of the remaining workpieces 2 of the plurality of workpieces 2 are imaged.

The robot system 100 includes the cart 10 to move the robot arm 21. Accordingly, the cart 10 can move the robot arm 21 to a location at which the workpieces 2 are placed. Even when the placement locations of the workpieces 2 are changed, the cart 10 can move the robot arm 21 to the vicinity of the changed placement locations of the workpieces 2.

The workpiece 2 includes a box-shaped workpiece 2, and the hand 30 includes the suckers 31 to suction the box-shaped workpiece 2. Accordingly, in the robot system 100 that suctions the box-shaped workpiece 2 with the suckers 31 and places the workpiece 2 on the conveyor 3, the cycle time for the repeated operations to image the workpieces 2 with the imager 40 and move the workpiece 2 with the hand 30 can be decreased.

### Second Embodiment

The configuration of a robot system 200 according to a second embodiment is now described with reference to FIG. 6. In the second embodiment, the imager 140 has at least one of a pan function, a tilt function, and a zoom function. Specifically, the imager 140 has all of the pan function, the tilt function, and the zoom function. The term "pan" refers to moving the lens of an imager 140 right and left. The term "tilt" refers to moving the lens of the imager 140 up and down. The term "zoom" refers to zooming in and out. A drive such as a motor is arranged in the imager 140. The drive is controlled by a controller 70 such that the imager 140 performs panning, tilting, and zooming. The remaining configurations of the second embodiment are similar to those of the first embodiment.

In the operation of the robot system 200 according to the second embodiment, in step S3 of FIG. 5, the controller 70 controls lifting, lowering, and rotation of a lifter 62 of an imager movement mechanism 60, the pan function, the tilt function, and the zoom function such that the imager 140 directly faces a workpiece 2 to be held next. The remaining operations of the robot system 200 according to the second embodiment are similar to those of the first embodiment.

### Advantages of Second Embodiment

The imager 140 has at least one of the pan function, the tilt function, and the zoom function. Accordingly, the imaging range of the imager 140 can be changed by the pan function and the tilt function. Furthermore, the angle of view of the imager 140 can be changed by the zoom function. In other words, the imaging area of the imager 140 can be easily changed by the pan function, the tilt function, and the zoom function. In addition to movement of the imager 140 by the imager movement mechanism 60, the imager 140 has at least one of the pan function, the tilt function, and the zoom function, and thus the imaging area of the imager 140 can be changed more greatly.

### Third Embodiment

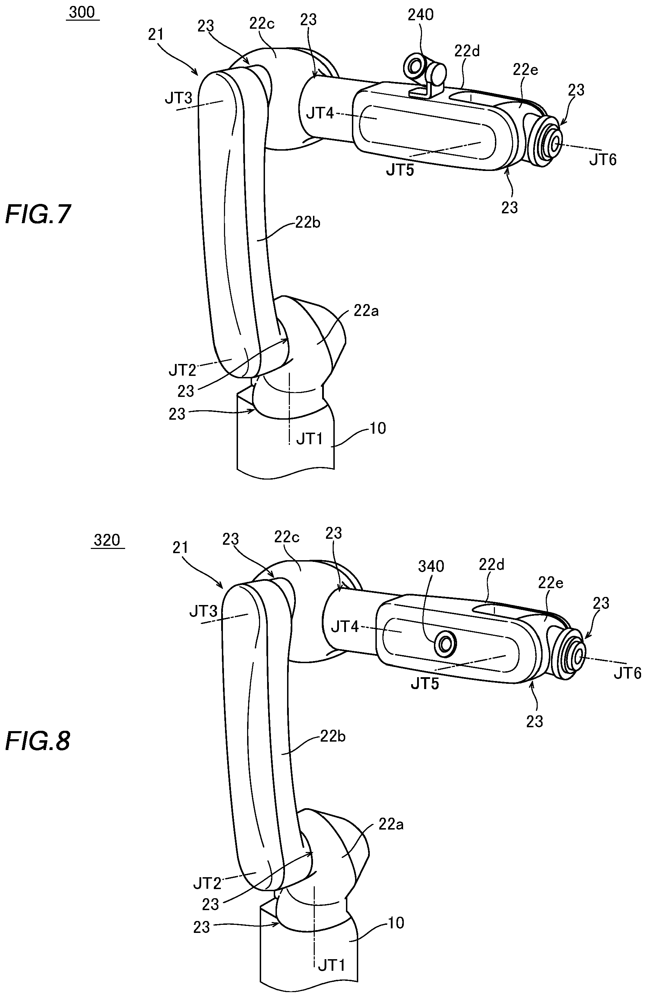

The configuration of a robot system 300 according to a third embodiment is now described with reference to FIG. 7. In the third embodiment, an imager 240 is arranged on an arm 22d. For example, the imager 240 is arranged on the outer surface of the arm 22d. Alternatively, the imager 240 may be arranged on the arm 22b, 22c, or 22e. Alternatively, the imager 240 may be arranged on more than one of the arms 22b, 22c, 22d, and 22e. That is, a plurality of imagers 240 may be arranged. In the operation of the robot system 300 according to the third embodiment, in step S1 of FIG. 5, a controller 70 controls movement of a cart 10 and at least one of the pan function, the tilt function, and the zoom function of the imager 240 such that the imager 240 can image all of a plurality of workpieces 2 stacked on a truck 1. A drive such as a motor is arranged in the imager 240. The drive is controlled by the controller 70 such that the imager 240 performs panning, tilting, and zooming.

In the operation of the robot system 300 according to the third embodiment, in step S3 of FIG. 5, the controller 70 controls the imager 240 to operate at least one of the pan function, the tilt function, and the zoom function to image a workpiece 2 to be held next among a plurality of workpieces 2 during the operation to rotate a robot arm 21 around a JT1 axis to place a workpiece 2 held by a hand 30 on a conveyor 3. When the workpiece 2 held by the hand 30 falls, the controller 70 controls the imager 240 to operate at least one of the pan function, the tilt function, and the zoom function to image the fallen workpiece 2. Then, the fallen workpiece 2 is held and placed on the conveyor 3 by the hand 30. The remaining configurations and operations of the robot system 300 according to the third embodiment are similar to as those of the first embodiment.

### Advantages of Third Embodiment

A plurality of workpieces 2 are arranged, and the imager 240 is on the arm 22e and has at least one of the pan function, the tilt function, and the zoom function. The controller 70 is configured or programmed to cause the hand 30 to hold one of the plurality of workpieces 2, and control the imager 240 to operate at least one of the pan function, the tilt function, and the zoom function to image the workpiece 2 to be held next among the plurality of workpieces 2 during the operation to rotate the robot arm 21 around the JT1 axis to place the workpiece 2 held by the hand 30 on the conveyor 3. Accordingly, the imager 240 itself has at least one of the pan function, the tilt function, and the zoom function such that it is not necessary to provide a separate movement mechanism to move the imager 240, and thus the complexity of the configuration of the robot system 300 can be reduced or prevented.

### Modified Examples

The embodiments disclosed this time must be considered as illustrative in all points and not restrictive. The scope of the present disclosure is not shown by the above description of the embodiments but by the scope of claims for patent, and all modifications (modified examples) within the meaning and scope equivalent to the scope of claims for patent are further included.

While the example in which the robot arm 21 is a vertical articulated robot arm has been shown in each of the aforementioned first, second, and third embodiments, the present disclosure is not limited to this. For example, the robot arm 21 may be a horizontal articulated robot arm.

While the example in which the workpiece 2 is placed on the conveyor 3 has been shown in each of the aforementioned first, second, and third embodiments, the present disclosure is not limited to this. For example, the workpiece 2 may be placed on a placement location other than the conveyor 3.

While the example in which the mounting member 50 has a plate shape has been shown in each of the aforementioned first and second embodiments, the present disclosure is not limited to this. For example, the mounting member 50 may have a rod shape.

While the example in which the imager 140 and the imager 240 have all of the pan function, the tilt function, and the zoom function has been shown in the aforementioned second and third embodiments, the present disclosure is not limited to this. For example, the imager 140 and the imager 240 may have only one or two of the pan function, the tilt function, and the zoom function.

While the example in which the robot arm 21 is placed on the cart 10 has been shown in each of the aforementioned first, second, and third embodiments, the present disclosure is not limited to this. For example, the robot arm 21 may be fixed to the floor or the like so as not to move.

While the example in which the workpieces 2 include box-shaped workpieces 2 has been shown in each of the aforementioned first, second, and third embodiments, the present disclosure is not limited to this. In the present disclosure, the workpieces 2 may include workpieces 2 other than the box-shaped workpieces 2. For example, the workpieces 2 may include machine components or the like that are loaded in bulk.

While the example in which the hand 30 includes the suckers 31 has been shown in each of the aforementioned first, second, and third embodiments, the present disclosure is not limited to this. For example, the hand 30 may include a chuck to grip the workpiece 2.

While the example in which the robot arm 21 is separate from the imager 40, the imager 140, or the imager 240 has been shown in each of the aforementioned first, second, and third embodiments, the present disclosure is not limited to this. For example, as shown in a robot 320 according to a modified example shown in FIG. 8, during the operation to place a workpiece 2 held by a hand 30 on a conveyor 3, a workpiece 2 to be held next may be imaged using an imager 340 built into a robot arm 21. In such a case, the imager 340 may have at least one of a pan function, a tilt function, and a zoom function. The controller 70 is included in the robot 320.

While the example in which the imager 40, the imager 140, and the imager 240 are attached to the robot arm 21 has been shown in the aforementioned first, second, and third embodiments, the present disclosure is not limited to this. For example, the imager may be attached to the cart 10. In such a case, the imager is rotated by a drive mechanism separate from the drive mechanism that rotates the robot arm 21 around the JT1 axis. Furthermore, the controller 70 performs a control to rotate the imager in synchronization with rotation of the robot arm 21 around the JT1 axis.

The functionality of the elements disclosed herein may be implemented using circuitry or processing circuitry that includes general purpose processors, special purpose processors, integrated circuits, application specific integrated circuits (ASICs), conventional circuitry and/or combinations thereof that are configured or programmed to perform the disclosed functionality. Processors are considered processing circuitry or circuitry as they include transistors and other circuitry therein. In the present disclosure, the circuitry, units, or means are hardware that carries out the recited functionality or hardware that is programmed to perform the recited functionality. The hardware may be hardware disclosed herein or other known hardware that is programmed or configured to carry out the recited functionality. When the hardware is a processor that may be considered a type of circuitry, the circuitry, means, or units are a combination of hardware and software, and the software is used to configure the hardware and/or processor.

### Aspects

It will be appreciated by those skilled in the art that the exemplary embodiments described above are specific examples of the following aspects.

### (Item 1)

A robot system comprising:
a robot main body including a base and a robot arm including a proximal end attached to the base so as to rotate around a first rotation axis, and a distal end to which a hand operable to hold a workpiece is attached;
an imager on the robot main body rotatable in accordance with movement of the robot main body, and including an imaging area to be changed separately from a change in the imaging area caused by rotation of the robot arm around the first rotation axis; and
a controller; wherein
the controller is configured or programmed to control the imaging area of the imager such that the workpiece to be held next is imaged during operation to rotate the robot arm around the first rotation axis to place the workpiece held by the hand at a predetermined placement location.

### (Item 2)

The robot system according to item 1, wherein the imaging area of the imager is changed by at least one of changing an imaging direction by moving the imager separately from the change in the imaging area caused by the rotation around the first rotation axis and changing a zoom magnification of the imager.

### (Item 3)

The robot system according to item 1 or 2, wherein
the robot arm includes an articulated robot arm including a proximal end arm connected to the base, and a distal end arm between the proximal end arm and the hand; and
the imager is attached to the proximal end arm or the distal end arm and is rotatable together with the rotation of the robot arm around the first rotation axis.

### (Item 4)

The robot system according to item 3, further comprising:
a mounting member rotatable together with the proximal end arm and to attach the imager to the proximal end arm.

### (Item 5)

The robot system according to item 4, further comprising:
an imager movement mechanism attached to the mounting member to perform at least one of lifting the imager up and down and rotating the imager around a second rotation axis different from the first rotation axis; wherein
the imager is moved by the imager movement mechanism such that the imaging area of the imager is changed.

### (Item 6)

The robot system according to item 5, wherein the imager has at least one of a pan function, a tilt function, and a zoom function.

### (Item 7)

The robot system according to item 5 or 6, wherein
the workpiece includes a plurality of workpieces; and
the controller is configured or programmed to:
   cause the hand to hold one of the plurality of workpieces; and
   control the imager movement mechanism such that the imager directly faces the workpiece to be held next among the plurality of workpieces during the operation to rotate the robot arm around the first rotation axis to place the workpiece held by the hand at the predetermined placement location.

### (Item 8)

The robot system according to any one of items 3 to 7, wherein
the workpiece includes a plurality of workpieces;
the imager is on the distal end arm and has at least one of a pan function, a tilt function, and a zoom function; and
the controller is configured or programmed to:
   cause the hand to hold one of the plurality of workpieces; and
   control the imager to operate at least one of the pan function, the tilt function, and the zoom function to image the workpiece to be held next among the plurality of workpieces during the operation to rotate the robot arm around the first rotation axis to place the workpiece held by the hand at the predetermined placement location.

### (Item 9)

The robot system according to any one of items 1 to 8, wherein
the workpiece includes a plurality of workpieces; and
the controller is configured or programmed to:
   cause the hand to hold one of the plurality of workpieces; and
   control the imaging area of the imager such that the workpiece to be held next among remaining workpieces of the plurality of workpieces is imaged without imaging all of the remaining workpieces during the operation to rotate the robot arm around the first rotation axis to place the workpiece held by the hand at the predetermined placement location.

### (Item 10)

The robot system according to any one of items 1 to 9, wherein the base includes a cart to move the robot arm.

### (Item 11)

The robot system according to any one of items 1 to 10, wherein
the workpiece includes a box-shaped workpiece; and
the hand includes a sucker to suction the box-shaped workpiece.

### (Item 12)

A robot comprising:
a robot main body including a base and a robot arm including a proximal end attached to the base so as to rotate around a predetermined rotation axis, and a distal end to which a hand operable to hold a workpiece is attached;
an imager on the robot main body rotatable in accordance with movement of the robot main body, and including an imaging area to be changed separately from a change in the imaging area caused by rotation of the robot arm around the predetermined rotation axis; and
a controller; wherein
the controller is configured or programmed to control the imaging area of the imager such that the workpiece to be held next is imaged during operation to rotate the robot arm around the predetermined rotation axis to place the workpiece held by the hand at a predetermined placement location.

### (Item 13)

A method for controlling a robot system, the robot system comprising a robot main body including a base and a robot arm including a proximal end attached to the base so as to rotate around a predetermined rotation axis, and a distal end to which a hand operable to hold a workpiece is attached, and an imager on the robot main body rotatable in accordance with movement of the robot main body and to image the workpiece, the method comprising:
causing the hand to hold the workpiece;
rotating the robot arm around the predetermined axis while the workpiece is held by the hand to place the workpiece at a predetermined placement location; and
controlling an imaging area of the imager separately from a change in the imaging area caused by rotation around the predetermined rotation axis such that the workpiece to be held next is imaged with the imager, during operation to place the workpiece held by the hand at the predetermined placement location.

## Claims

1. A robot system comprising:
a robot main body including a base and a robot arm including a proximal end attached to the base so as to rotate around a first rotation axis, and a distal end to which a hand operable to hold a workpiece is attached;
an imager on the robot main body rotatable in accordance with movement of the robot main body, and including an imaging area to be changed separately from a change in the imaging area caused by rotation of the robot arm around the first rotation axis; and
a controller; wherein
the controller is configured or programmed to control the imaging area of the imager such that the workpiece to be held next is imaged during operation to rotate the robot arm around the first rotation axis to place the workpiece held by the hand at a predetermined placement location.

2. The robot system according to claim 1, wherein the imaging area of the imager is changed by at least one of changing an imaging direction by moving the imager separately from the change in the imaging area caused by the rotation around the first rotation axis and changing a zoom magnification of the imager.

3. The robot system according to claim 1, wherein
the robot arm includes an articulated robot arm including a proximal end arm connected to the base, and a distal end arm between the proximal end arm and the hand; and
the imager is attached to the proximal end arm or the distal end arm and is rotatable together with the rotation of the robot arm around the first rotation axis.

4. The robot system according to claim 3, further comprising:
a mounting member rotatable together with the proximal end arm and to attach the imager to the proximal end arm.

5. The robot system according to claim 4, further comprising:
an imager movement mechanism attached to the mounting member to perform at least one of lifting the imager up and down and rotating the imager around a second rotation axis different from the first rotation axis; wherein
the imager is moved by the imager movement mechanism such that the imaging area of the imager is changed.

6. The robot system according to claim 5, wherein the imager has at least one of a pan function, a tilt function, and a zoom function.

7. The robot system according to claim 5, wherein
the workpiece includes a plurality of workpieces; and
the controller is configured or programmed to:
cause the hand to hold one of the plurality of workpieces; and
control the imager movement mechanism such that the imager directly faces the workpiece to be held next among the plurality of workpieces during the operation to rotate the robot arm around the first rotation axis to place the workpiece held by the hand at the predetermined placement location.

8. The robot system according to claim 3, wherein
the workpiece includes a plurality of workpieces;
the imager is on the distal end arm and has at least one of a pan function, a tilt function, and a zoom function; and
the controller is configured or programmed to:
cause the hand to hold one of the plurality of workpieces; and
control the imager to operate at least one of the pan function, the tilt function, and the zoom function to image the workpiece to be held next among the plurality of workpieces during the operation to rotate the robot arm around the first rotation axis to place the workpiece held by the hand at the predetermined placement location.

9. The robot system according to claim 1, wherein
the workpiece includes a plurality of workpieces; and
the controller is configured or programmed to:
cause the hand to hold one of the plurality of workpieces; and
control the imaging area of the imager such that the workpiece to be held next among remaining workpieces of the plurality of workpieces is imaged without imaging all of the remaining workpieces during the operation to rotate the robot arm around the first rotation axis to place the workpiece held by the hand at the predetermined placement location.

10. The robot system according to claim 1, wherein the base includes a cart to move the robot arm.

11. The robot system according to claim 1, wherein
the workpiece includes a box-shaped workpiece; and
the hand includes a sucker to suction the box-shaped workpiece.

12. A robot comprising:
a robot main body including a base and a robot arm including a proximal end attached to the base so as to rotate around a predetermined rotation axis, and a distal end to which a hand operable to hold a workpiece is attached;
an imager on the robot main body rotatable in accordance with movement of the robot main body, and including an imaging area to be changed separately from a change in the imaging area caused by rotation of the robot arm around the predetermined rotation axis; and
a controller; wherein
the controller is configured or programmed to control the imaging area of the imager such that the workpiece to be held next is imaged during operation to rotate the robot arm around the predetermined rotation axis to place the workpiece held by the hand at a predetermined placement location.

13. A method for controlling a robot system, the robot system comprising a robot main body including a base and a robot arm including a proximal end attached to the base so as to rotate around a predetermined rotation axis, and a distal end to which a hand operable to hold a workpiece is attached, and an imager on the robot main body rotatable in accordance with movement of the robot main body and to image the workpiece, the method comprising:
causing the hand to hold the workpiece;
rotating the robot arm around the predetermined axis while the workpiece is held by the hand to place the workpiece at a predetermined placement location; and
controlling an imaging area of the imager separately from a change in the imaging area caused by rotation around the predetermined rotation axis such that the workpiece to be held next is imaged with the imager, during operation to place the workpiece held by the hand at the predetermined placement location.
